# EUROPEAN PATENT APPLICATION

(11) **EP 4 852 104 A1**
(43) Date of publication of application: **09.12.2026**
(21) Application number: 24921907.2
(22) Date of filing: 23.12.2024
(51) Int. Cl.: H01M 8/04, C01B 3/04, H01M 8/10, H01M 8/12, H01M 8/0606, H01M 8/04014, H01M 8/04111

(54) **FUEL CELL SYSTEM**

(30) Priority: 02.02.2024 JP 2024014761
(71) Applicant: IHI Corporation, Koto-ku Tokyo 135-8710 (JP)
(72) Inventor: SAKISAKA, Ryota, Tokyo 135-8710 (JP); SUZUKI, Tetsu, Tokyo 135-8710 (JP)
(74) Representative: TBK
(86) International application number: PCT/JP2024/045352
(87) International publication number: WO 2025/164154

(57) **Abstract**

A fuel cell system 100 includes: a tank 110 configured to store ammonia; a reformer 120 configured to thermally decompose ammonia supplied from the tank 110 to generate hydrogen; a solid oxide fuel cell 150 configured to generate electricity using, as a fuel, the ammonia supplied from the tank 110 or the hydrogen generated by the reformer 120; a polymer electrolyte fuel cell 130 configured to generate electricity using, as a fuel, the hydrogen generated by the reformer 120; and an exhaust gas supply flow path 170 configured to supply a first exhaust gas produced in the solid oxide fuel cell 150 to the reformer 120.

## Description

### Technical Field

The present disclosure relates to a fuel cell system. This application claims the benefit of priority from Japanese Patent Application No. 2024-14761 filed on February 2, 2024, the content of which is incorporated herein.

### Background Art

A fuel cell system including a combination of a polymer electrolyte fuel cell having high responsiveness to a load fluctuation and a solid oxide fuel cell having high power generation efficiency has been disclosed (e.g., Patent Literature 1).

### Citation List

### Patent Literature

Patent Literature 1: JP 2019-29051A

### Summary

### Technical Problem

Incidentally, a technology that uses ammonia higher in energy density than hydrogen as a fuel for a fuel cell system has been under consideration in recent years.

It is not, however, possible to provide the inside of the polymer electrolyte fuel cell with a mechanism that thermally decomposes ammonia due to the temperature constraint imposed by polymers. This disables the polymer electrolyte fuel cell from generating electricity if directly supplied with ammonia. It has been therefore considered to provide the fuel cell system including the polymer electrolyte fuel cell as described in Patent Literature 1 above with a reformer that thermally decomposes ammonia to generate hydrogen and a combustor that generates a combustion exhaust gas serving as a heat source for the reformer.

Such a combustor combusts the hydrogen generated by the reformer as a fuel. In this case, as the hydrogen is combusted by the combustor, hydrogen to be supplied to the polymer electrolyte fuel cell, however, decreases. This raises a problem that the polymer electrolyte fuel cell decreases in power generation efficiency.

Accordingly, the development of a technology that reduces a decrease in the power generation efficiency of the fuel cell system including the combination of the polymer electrolyte fuel cell and the solid oxide fuel cell has been requested.

In view of such a problem, an object of the present disclosure is to provide a fuel cell system that makes it possible to reduce a decrease in power generation efficiency.

### Solution to Problem

To solve the problem, a fuel cell system according to one aspect of the present disclosure includes: a tank configured to store ammonia; a reformer configured to thermally decompose ammonia supplied from the tank to generate hydrogen; a solid oxide fuel cell configured to generate electricity using, as a fuel, the ammonia supplied from the tank or the hydrogen generated by the reformer; a polymer electrolyte fuel cell configured to generate electricity using, as a fuel, the hydrogen generated by the reformer; and an exhaust gas supply flow path configured to supply a first exhaust gas produced in the solid oxide fuel cell to the reformer.

In addition, the fuel cell system may include a turbine configured to be rotated by the first exhaust gas discharged from the reformer.

In addition, the fuel cell system may include: a turbine; and a first heat exchanger configured to exchange heat between a fluid that has not yet been supplied to the turbine and the first exhaust gas discharged from the reformer.

In addition, the turbine may be rotated by a second exhaust gas produced in the polymer electrolyte fuel cell in addition to the first exhaust gas discharged from the reformer.

In addition, the fuel cell system may include a second heat exchanger configured to exchange heat between the hydrogen generated by the reformer and the second exhaust gas.

### Advantageous Effects of Invention

The present disclosure makes it possible to reduce a decrease in power generation efficiency.

### Brief Description of Drawings

[FIG. 1] FIG. 1 is a diagram describing an example of a fuel cell system according to a first embodiment.
[FIG. 2] FIG. 2 is a diagram describing an example of a fuel cell system according to a second embodiment.
[FIG. 3] FIG. 3 is a diagram describing an example of a fuel cell system according to a third embodiment.
[FIG. 4] FIG. 4 is a diagram describing an example of a fuel cell system according to a fourth embodiment.
[FIG. 5] FIG. 5 is a diagram describing an example of a fuel cell system according to a fifth embodiment.
[FIG. 6] FIG. 6 is a diagram describing an example of a fuel cell system according to a sixth embodiment.
[FIG. 7] FIG. 7 is a diagram describing an example of a fuel cell system according to a seventh embodiment.

### Description of Embodiments

Hereinafter, embodiments of the present disclosure will be described in detail with reference to the appended drawings. Dimensions, materials, other specific numerical values, and the like indicated in the embodiments are merely examples for ease of understanding and are not intended to limit the present disclosure unless otherwise specified. It is noted that elements having substantially the same functions and configurations are denoted with the same reference signs in the present specification and the drawings to omit duplicate description. In addition, elements that are not directly related to the present disclosure will not be illustrated.

### [First Embodiment: Fuel Cell System 100]

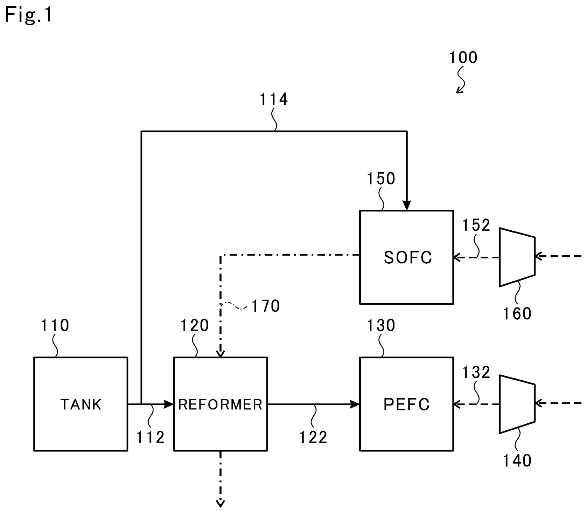

FIG. 1 is a diagram describing an example of a fuel cell system 100 according to a first embodiment. As illustrated in FIG. 1, the fuel cell system 100 according to the first embodiment includes a tank 110, a reformer 120, a polymer electrolyte fuel cell (Polymer Electrolyte Fuel Cell that will be referred to as a "PEFC" below in some cases) 130, a compressor 140, a solid oxide fuel cell (Solid Oxide Fuel Cell that will be referred to as an "SOFC" below in some cases) 150, a compressor 160, and an exhaust gas supply flow path 170. It is noted that solid arrows illustrate flows of ammonia and hydrogen in each of FIGS. 1 to 7. In addition, dashed arrows illustrate flows of an oxygen-containing gas. Dash-dotted arrows illustrate flows of a first exhaust gas and a second exhaust gas.

The tank 110 stores any one or both of liquid ammonia and gaseous ammonia.

The reformer 120 is connected to the tank 110 via an ammonia flow path 112. The ammonia stored in the tank 110 is supplied to the reformer 120 through the ammonia flow path 112. The reformer 120 thermally decomposes the ammonia supplied from the tank 110 to generate hydrogen. The reformer 120 is, for example, a heat exchanger that exchanges heat between the ammonia and the first exhaust gas produced in the SOFC 150 described below. The reformer 120 transfers the heat of the first exhaust gas to the ammonia to thermally decompose the ammonia. The reformer 120 includes, for example, an ammonia passage and an exhaust gas passage. The ammonia passage is supplied with ammonia from the tank 110. For example, the ammonia passage is filled with a catalyst that promotes the thermal decomposition of ammonia. The catalyst includes, for example, any one or both of a ruthenium (Ru) catalyst and a nickel (Ni) catalyst. The exhaust gas passage is supplied with the first exhaust gas from the SOFC 150.

The anode (fuel electrode) of the PEFC 130 is connected to the reformer 120 via a hydrogen flow path 122. The hydrogen generated by the reformer 120 is supplied to the anode of the PEFC 130 through the hydrogen flow path 122. In addition, the PEFC 130 is supplied with the oxygen-containing gas from the compressor 140 described below. The oxygen-containing gas is, for example, air or oxygen-enriched air. The PEFC 130 generates electricity using the hydrogen generated by the reformer 120 as a fuel. The voltage of the electric power generated by the PEFC 130 is converted, for example, by a DC/DC converter and the electric power is then output to a load.

The compressor 140 compresses the oxygen-containing gas. In the present embodiment, the compressor 140 is connected to the cathode (air electrode) of the PEFC 130 via an oxygen-containing gas flow path 132. The oxygen-containing gas compressed by the compressor 140 is therefore supplied to the cathode of the PEFC 130 through the oxygen-containing gas flow path 132.

The anode (fuel electrode) of the SOFC 150 is connected to the tank 110 via the ammonia flow path 112 and an ammonia flow path 114. The ammonia flow path 114 branches from the ammonia flow path 112 and is connected to the anode of the SOFC 150. The ammonia stored in the tank 110 is supplied to the anode of the SOFC 150 through the ammonia flow path 112 and the ammonia flow path 114. In addition, the SOFC 150 is supplied with the oxygen-containing gas from the compressor 160 described below. The SOFC 150 generates electricity using the ammonia as a fuel. The voltage of the electric power generated by the SOFC 150 is converted, for example, by a DC/DC converter and the electric power is then output to a load.

The fuel cell system 100 may keep, for example, the SOFC 150 in continuous operation and generate the electricity for a load fluctuation using the PEFC 130.

The compressor 160 compresses the oxygen-containing gas. In the present embodiment, the compressor 160 is connected to the cathode (air electrode) of the SOFC 150 via an oxygen-containing gas flow path 152. The oxygen-containing gas compressed by the compressor 160 is therefore supplied to the cathode of the SOFC 150 through the oxygen-containing gas flow path 152.

The exhaust gas supply flow path 170 connects the off-gas discharge port of the SOFC 150 and the inlet of the exhaust gas passage of the reformer 120. The first exhaust gas produced in the SOFC 150 is therefore supplied to the reformer 120 through the exhaust gas supply flow path 170. The first exhaust gas produced in the SOFC 150 includes, for example, any one or both of an anode off-gas and a cathode off-gas.

As described above, the fuel cell system 100 according to the first embodiment includes the tank 110 that stores ammonia, the reformer 120 that thermally decomposes ammonia supplied from the tank 110 to generate hydrogen, the solid oxide fuel cell 150 that generates electricity using, as a fuel, the ammonia supplied from the tank 110, the polymer electrolyte fuel cell 130 that generates electricity using, as a fuel, the hydrogen generated by the reformer 120, and the exhaust gas supply flow path 170 that supplies the first exhaust gas produced in the solid oxide fuel cell 150 to the reformer 120.

This allows the fuel cell system 100 according to the first embodiment to thermally decompose the ammonia using the high-temperature first exhaust gas produced in the solid oxide fuel cell 150. Unlike a comparative example in which ammonia is thermally decomposed using a combustion exhaust gas obtained when hydrogen generated by the reformer 120 is combusted, it is thus possible to avoid a situation in which the polymer electrolyte fuel cell 130 is supplied with less hydrogen. This allows the fuel cell system 100 according to the first embodiment to reduce a decrease in the power generation efficiency of the polymer electrolyte fuel cell 130.

### [Second Embodiment: Fuel Cell System 200]

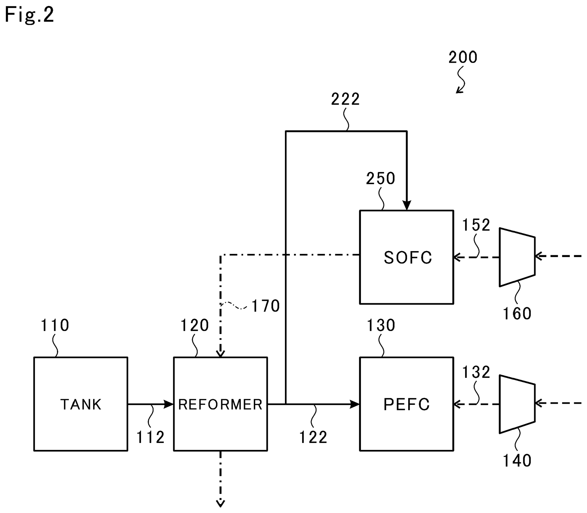

FIG. 2 is a diagram describing an example of a fuel cell system 200 according to a second embodiment. As illustrated in FIG. 2, the fuel cell system 200 according to the second embodiment includes the tank 110, the reformer 120, the polymer electrolyte fuel cell 130, the compressor 140, a solid oxide fuel cell 250, the compressor 160, and the exhaust gas supply flow path 170. It is noted that a component which is substantially equal to that of the fuel cell system 100 will be denoted with the same reference sign to omit description. The fuel cell system 200 according to the present embodiment is different from the fuel cell system 100 in that the fuel cell system 200 includes a hydrogen flow path 222 instead of the ammonia flow path 114, and the fuel cell system 200 is the same as the fuel cell system 100 in other respects.

In the present embodiment, the SOFC 250 is connected to the reformer 120 via the hydrogen flow path 122 and the hydrogen flow path 222. The hydrogen flow path 222 branches from the hydrogen flow path 122 and is connected to the anode of the SOFC 250. The hydrogen generated by the reformer 120 is supplied to the anode of the SOFC 250 through the hydrogen flow path 122 and the hydrogen flow path 222. The SOFC 250 generates electricity using the hydrogen generated by the reformer 120 as a fuel.

As described above, the fuel cell system 200 according to the second embodiment includes the tank 110 that stores ammonia, the reformer 120 that thermally decomposes ammonia supplied from the tank 110 to generate hydrogen, the solid oxide fuel cell 250 that generates electricity using, as a fuel, the hydrogen generated by the reformer 120, the polymer electrolyte fuel cell 130 that generates electricity using, as a fuel, the hydrogen generated by the reformer 120, and the exhaust gas supply flow path 170 that supplies the first exhaust gas produced in the solid oxide fuel cell 250 to the reformer 120.

This allows the fuel cell system 200 according to the second embodiment to thermally decompose the ammonia using the high-temperature first exhaust gas produced in the solid oxide fuel cell 250. Unlike a comparative example in which ammonia is thermally decomposed using a combustion exhaust gas obtained when hydrogen generated by the reformer 120 is combusted, it is thus possible to avoid a situation in which the polymer electrolyte fuel cell 130 and the solid oxide fuel cell 150 are each supplied with less hydrogen. This allows the fuel cell system 200 according to the second embodiment to reduce a decrease in the power generation efficiency of the polymer electrolyte fuel cell 130 and the solid oxide fuel cell 150.

### [Third Embodiment: Fuel Cell System 300]

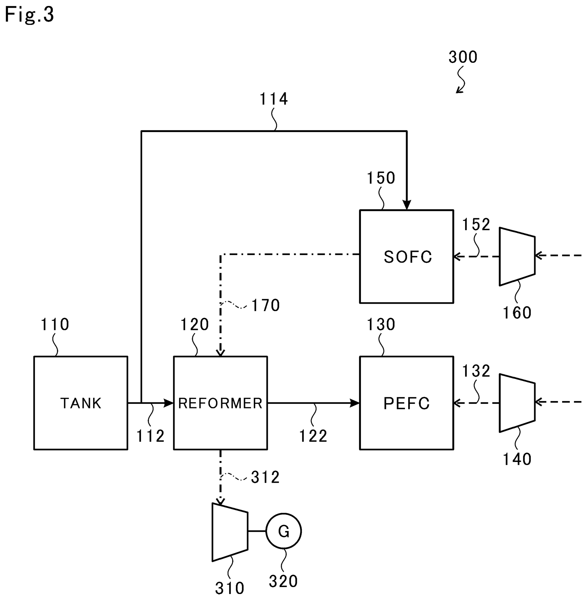

Nothing is mentioned about a destination for which the energy of the first exhaust gas discharged from the reformer 120 is used in the fuel cell system 100 according to the first embodiment. In a third embodiment, the destination for which the energy of the first exhaust gas discharged from the reformer 120 is used will be described. FIG. 3 is a diagram describing an example of a fuel cell system 300 according to the third embodiment. As illustrated in FIG. 3, the fuel cell system 300 according to the third embodiment includes the tank 110, the reformer 120, the polymer electrolyte fuel cell 130, the compressor 140, the solid oxide fuel cell 150, the compressor 160, the exhaust gas supply flow path 170, a turbine 310, and an electricity generator 320. It is noted that a component which is substantially equal to that of the fuel cell system 100 will be denoted with the same reference sign to omit description. The fuel cell system 300 according to the present embodiment is different from the fuel cell system 100 in that the turbine 310 and the electricity generator 320 are added, and the fuel cell system 300 is the same as the fuel cell system 100 in other respects.

The turbine 310 is connected to the outlet of the exhaust gas passage of the reformer 120 via an exhaust gas discharge flow path 312. The first exhaust gas discharged from the reformer 120 is supplied to the turbine 310 through the exhaust gas discharge flow path 312. The turbine 310 is then rotated by the first exhaust gas discharged from the reformer 120.

The electricity generator 320 is connected to the turbine 310. The electricity generator 320 generates electricity using the rotation of the turbine 310. Electric power generated by the electricity generator 320 is output, for example, to the compressor 140 and the compressor 160. Alternatively, the generated electric power is output to the outside along with electric power generated by the PEFC 130 and the SOFC 150.

As described above, the fuel cell system 300 according to the third embodiment includes the turbine 310 in addition to the components of the fuel cell system 100. This allows the fuel cell system 300 according to the third embodiment to collect the energy of the first exhaust gas discharged from the reformer 120. In addition, the fuel cell system 300 according to the third embodiment includes the electricity generator 320. This makes it possible to convert the energy collected by the turbine 310 into electric power.

### [Fourth Embodiment: Fuel Cell System 400]

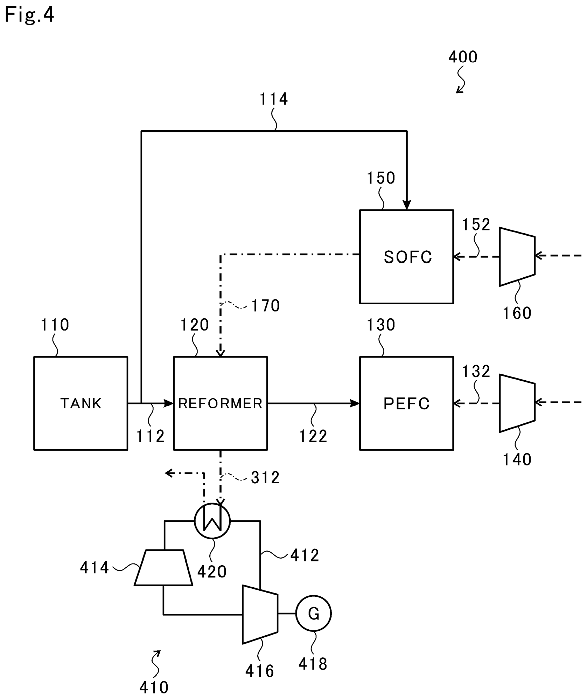

The case where the first exhaust gas as discharged from the reformer 120 is supplied to the turbine 310 in the fuel cell system 300 according to the third embodiment has been described as an example. The turbine may be, however, rotated by the thermal energy of the first exhaust gas discharged from the reformer 120. FIG. 4 is a diagram describing an example of a fuel cell system 400 according to a fourth embodiment. As illustrated in FIG. 4, the fuel cell system 400 according to the fourth embodiment includes the tank 110, the reformer 120, the polymer electrolyte fuel cell 130, the compressor 140, the solid oxide fuel cell 150, the compressor 160, the exhaust gas supply flow path 170, and a binary electricity generator 410. It is noted that a component which is substantially equal to that of the fuel cell system 300 will be denoted with the same reference sign to omit description. The fuel cell system 400 according to the present embodiment is different from the fuel cell system 300 in that the fuel cell system 400 includes the binary electricity generator 410 instead of the turbine 310 and the electricity generator 320, and the fuel cell system 400 is the same as the fuel cell system 300 in other respects.

The binary electricity generator 410 includes a circulation path 412, a compressor 414, a turbine 416, an electricity generator 418, and a first heat exchanger 420. The circulation path 412 is a flow path in which a fluid circulates. The compressor 414 is provided in the circulation path 412 and compresses the fluid.

The turbine 416 is provided in the circulation path 412 and rotated by the fluid compressed by the compressor 414. The electricity generator 418 is connected to the turbine 416. The electricity generator 418 generates electricity using the rotation of the turbine 416. Electric power generated by the electricity generator 418 is output, for example, to the compressor 140 and the compressor 160. Alternatively, the generated electric power is output to the outside along with electric power generated by the PEFC 130 and the SOFC 150.

The first heat exchanger 420 exchanges heat between the fluid that has not yet been supplied to the turbine 416 and the first exhaust gas discharged from the reformer 120. In the present embodiment, the first heat exchanger 420 exchanges heat between the fluid flowing between the compressor 414 and the turbine 416 in the circulation path 412 and the first exhaust gas flowing in the exhaust gas discharge flow path 312. This makes it possible to transfer the heat of the first exhaust gas discharged from the reformer 120 to the fluid. The fluid is heated and the first exhaust gas is cooled.

In the present embodiment, the turbine 416 is therefore rotated by the fluid that has been subjected to heat exchange by the first heat exchanger 420.

As described above, the fuel cell system 400 according to the fourth embodiment includes the turbine 416 and the first heat exchanger 420 in addition to the components of the fuel cell system 100. This allows the fuel cell system 400 according to the fourth embodiment to collect the thermal energy of the first exhaust gas discharged from the reformer 120. In addition, the fuel cell system 400 according to the fourth embodiment includes the electricity generator 418. This makes it possible to convert the energy collected by the turbine 416 into electric power.

In addition, the fuel cell system 400 according to the fourth embodiment supplies the first exhaust gas discharged from the reformer 120 to the first heat exchanger 420. A pressure drop in the first heat exchanger 420 is less than a pressure drop in the turbine 310 included in the fuel cell system 300. This allows the fuel cell system 400 according to the fourth embodiment to efficiently discharge the first exhaust gas from the reformer 120 in comparison with the fuel cell system 300 and avoid a malfunction in the SOFC 150.

### [Fifth Embodiment: Fuel Cell System 500]

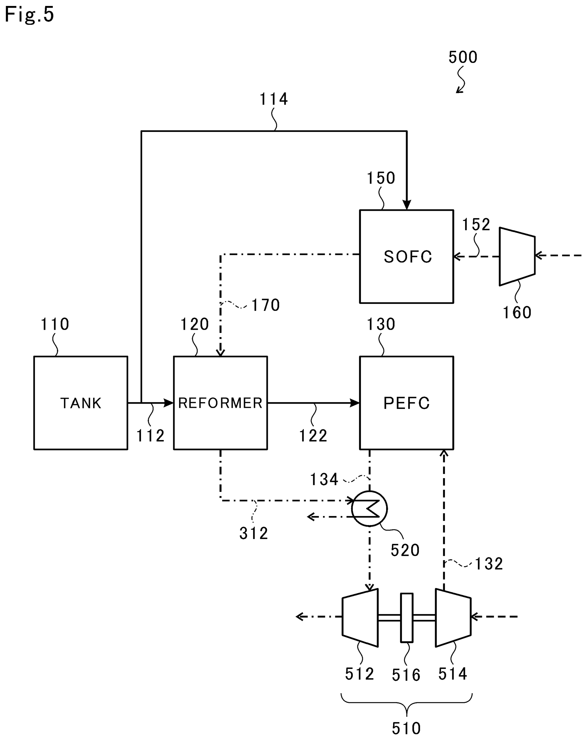

The case where the turbine 416 connected to the electricity generator 418 is supplied with the thermal energy of the first exhaust gas discharged from the reformer 120 in the fuel cell system 400 according to the fourth embodiment has been described as an example. The thermal energy of the first exhaust gas discharged from the reformer 120 may be, however, supplied to another turbine. FIG. 5 is a diagram describing an example of a fuel cell system 500 according to a fifth embodiment. As illustrated in FIG. 5, the fuel cell system 500 according to the fifth embodiment includes the tank 110, the reformer 120, the polymer electrolyte fuel cell 130, the solid oxide fuel cell 150, the compressor 160, the exhaust gas supply flow path 170, a supercharger 510, and a first heat exchanger 520. It is noted that a component which is substantially equal to that of the fuel cell system 400 will be denoted with the same reference sign to omit description. The fuel cell system 500 according to the present embodiment is different from the fuel cell system 400 in that the fuel cell system 500 includes the supercharger 510 instead of the binary electricity generator 410, and the fuel cell system 500 is the same as the fuel cell system 400 in other respects.

The supercharger 510 includes a turbine 512 and a compressor 514. Additionally, in the present embodiment, the supercharger 510 is, for example, an electric turbocharger including a motor 516 that rotates the compressor 514 in addition to the turbine 512 and the compressor 514.

The turbine 512 is connected to the discharge port of the PEFC 130 via a second exhaust gas flow path 134. The second exhaust gas (e.g., cathode off-gas) discharged from the discharge port of the PEFC 130 is supplied to the turbine 512 through the second exhaust gas flow path 134. The turbine 512 is then rotated by the second exhaust gas produced in the PEFC 130.

The compressor 514 is connected to the turbine 512. The compressor 514 is rotated by the rotation of the turbine 512. In the present embodiment, the compressor 514 is also rotated by the motor 516 in addition to the rotation of the turbine 512. The compressor 514 compresses the oxygen-containing gas. In the present embodiment, the compressor 514 is connected to the cathode of the PEFC 130 via the oxygen-containing gas flow path 132. The oxygen-containing gas compressed by the compressor 514 is therefore supplied to the cathode of the PEFC 130 through the oxygen-containing gas flow path 132.

The first heat exchanger 520 exchanges heat between the first exhaust gas discharged from the reformer 120 and the second exhaust gas (fluid) that has not yet been supplied to the turbine 512. In the present embodiment, the first heat exchanger 520 exchanges heat between the first exhaust gas flowing in the exhaust gas discharge flow path 312 and the second exhaust gas flowing in the second exhaust gas flow path 134. This makes it possible to transfer the heat of the first exhaust gas discharged from the reformer 120 to the second exhaust gas discharged from the PEFC 130. The second exhaust gas discharged from the PEFC 130 is thus heated and the first exhaust gas discharged from the reformer 120 is cooled.

In the present embodiment, the turbine 512 is therefore rotated by the second exhaust gas that has been subjected to heat exchange by the first heat exchanger 520.

As described above, the fuel cell system 500 according to the fifth embodiment includes the turbine 512 and the first heat exchanger 520 in addition to the components of the fuel cell system 100.

This allows the fuel cell system 500 according to the fifth embodiment to rotate the turbine 512 using the second exhaust gas produced in the PEFC 130. It is therefore possible for the fuel cell system 500 according to the fifth embodiment to obtain mechanical power to be used by the compressor 514 from the rotation of the turbine 512 and reduce electric power to be consumed by the motor 516. In addition, it is possible for the fuel cell system 500 according to the fifth embodiment to heat the second exhaust gas using the high-temperature first exhaust gas and then supply the second exhaust gas to the turbine 512. It is thus possible for the fuel cell system 500 according to the fifth embodiment to rotate the turbine 512 using the thermal energy of the first exhaust gas in addition to the energy of the second exhaust gas. It is thus possible for the fuel cell system 500 according to the fifth embodiment to increase mechanical power to be supplied from the turbine 512 to the compressor 514. This allows the fuel cell system 500 according to the fifth embodiment to further reduce electric power to be consumed by the motor 146.

In addition, it is possible for the fuel cell system 500 according to the fifth embodiment to avoid a situation in which the first exhaust gas discharged from the reformer 120 is directly supplied to the turbine 512. This allows the fuel cell system 500 according to the fifth embodiment to avoid a situation in which the turbine 512 malfunctions due to dust or the like included in the first exhaust gas discharged from the reformer 120.

### [Sixth Embodiment: Fuel Cell System 600]

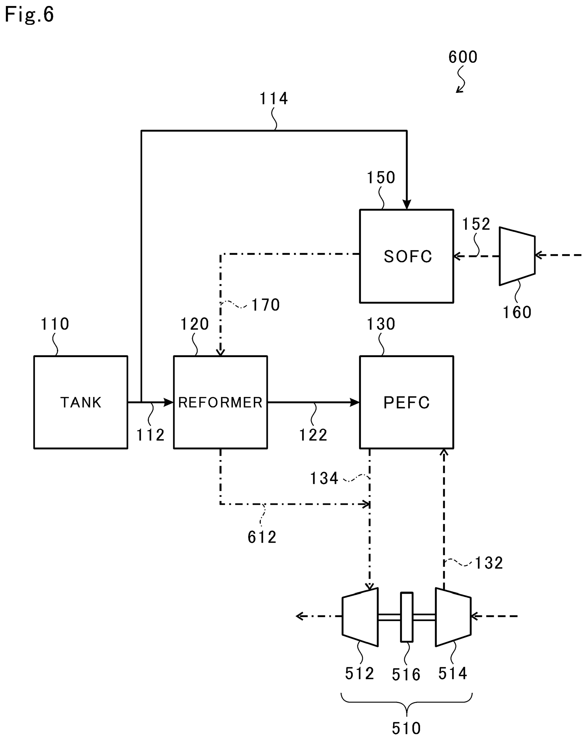

The case where the thermal energy of the first exhaust gas discharged from the reformer 120 is supplied to the turbine 512 in the fuel cell system 500 according to the fifth embodiment has been described as an example. The first exhaust gas as discharged from the reformer 120 may be, however, supplied to the turbine 512. FIG. 6 is a diagram describing an example of a fuel cell system 600 according to a sixth embodiment. As illustrated in FIG. 6, the fuel cell system 600 according to the sixth embodiment includes the tank 110, the reformer 120, the polymer electrolyte fuel cell 130, the solid oxide fuel cell 150, the compressor 160, the exhaust gas supply flow path 170, the supercharger 510, and an exhaust gas discharge flow path 612. It is noted that a component which is substantially equal to that of the fuel cell system 500 will be denoted with the same reference sign to omit description. The fuel cell system 600 according to the present embodiment is different from the fuel cell system 500 in that the first heat exchanger 520 is omitted, and the fuel cell system 600 is the same as the fuel cell system 500 in other respects.

The exhaust gas discharge flow path 612 causes the first exhaust gas discharged from the reformer 120 to join the second exhaust gas produced in the PEFC 130. The exhaust gas discharge flow path 612 connects, for example, the outlet of the exhaust gas passage of the reformer 120 and the second exhaust gas flow path 134.

The turbine 512 is thus rotated by the second exhaust gas produced in the PEFC 130 in addition to the first exhaust gas discharged from the reformer 120.

As described above, the fuel cell system 600 according to the sixth embodiment includes the turbine 512 and the exhaust gas discharge flow path 612 in addition to the components of the fuel cell system 100.

The fuel cell system 600 according to the sixth embodiment hereby supplies the second exhaust gas produced in the PEFC 130 to the turbine 512 in addition to the first exhaust gas discharged from the reformer 120. It is thus possible for the fuel cell system 600 according to the sixth embodiment to rotate the turbine 512 using the first exhaust gas and the second exhaust gas. It is thus possible for the fuel cell system 600 according to the sixth embodiment to increase mechanical power to be supplied from the turbine 512 to the compressor 514. This allows the fuel cell system 600 according to the sixth embodiment to further reduce electric power to be consumed by the motor 516.

### [Seventh Embodiment: Fuel Cell System 700]

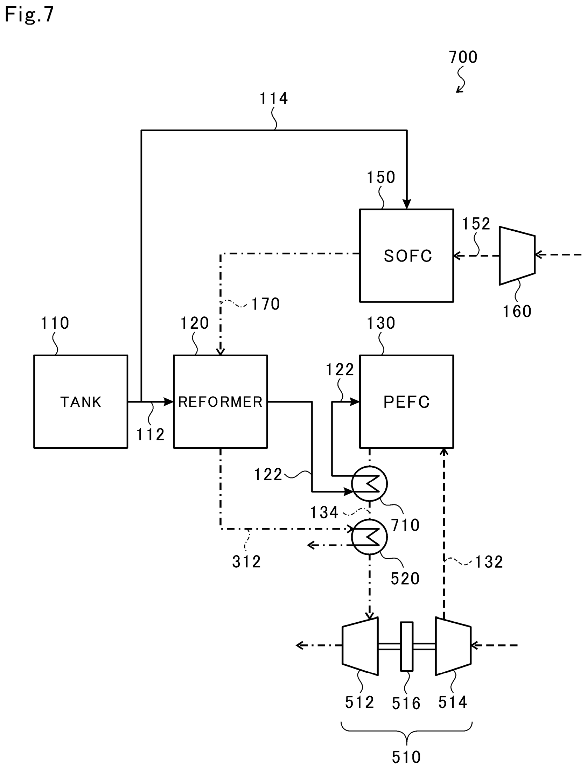

The case where the thermal energy of the first exhaust gas discharged from the reformer 120 is supplied to the turbine 512 in the fuel cell system 500 according to the fifth embodiment has been described as an example. The turbine 512 may be, however, supplied with other thermal energy in addition to the thermal energy of the first exhaust gas discharged from the reformer 120. FIG. 7 is a diagram describing an example of a fuel cell system 700 according to a seventh embodiment. As illustrated in FIG. 7, the fuel cell system 700 according to the seventh embodiment includes the tank 110, the reformer 120, the polymer electrolyte fuel cell 130, the solid oxide fuel cell 150, the compressor 160, the exhaust gas supply flow path 170, the supercharger 510, the first heat exchanger 520, and a second heat exchanger 710. It is noted that a component which is substantially equal to that of the fuel cell system 500 will be denoted with the same reference sign to omit description. The fuel cell system 700 according to the present embodiment is different from the fuel cell system 500 in that the second heat exchanger 710 is added, and the fuel cell system 700 is the same as the fuel cell system 500 in other respects.

The second heat exchanger 710 exchanges heat between the hydrogen generated by the reformer 120 and the second exhaust gas produced in the PEFC 130. In the present embodiment, the second heat exchanger 710 exchanges heat between the hydrogen passing through the hydrogen flow path 122 and the second exhaust gas passing through the second exhaust gas flow path 134. This makes it possible to transfer the heat of the hydrogen generated by the reformer 120 to the second exhaust gas. The second exhaust gas is heated and the hydrogen is cooled.

In addition, in the present embodiment, the first heat exchanger 520 exchanges heat between the first exhaust gas discharged from the reformer 120 and the second exhaust gas that has been subjected to heat exchange by the second heat exchanger 710 and has not yet been supplied to the turbine 512. In the present embodiment, the first heat exchanger 520 exchanges heat between the first exhaust gas flowing in the exhaust gas discharge flow path 312 and the second exhaust gas flowing between the portion of the second exhaust gas flow path 134 provided with the second heat exchanger 710 and the turbine 512. This makes it possible to transfer the heat of the first exhaust gas discharged from the reformer 120 to the second exhaust gas that has been subjected to heat exchange. The second exhaust gas produced in the PEFC 130 is thus further heated and the first exhaust gas discharged from the reformer 120 is cooled.

In the present embodiment, the turbine 512 is therefore rotated by the second exhaust gas that has been subjected to heat exchange by the second heat exchanger 710 and the first heat exchanger 520.

As described above, the fuel cell system 700 according to the seventh embodiment includes the first heat exchanger 520 and the second heat exchanger 710.

This allows the fuel cell system 700 according to the seventh embodiment to heat the second exhaust gas using the high-temperature hydrogen generated in the reformer 120 and the high-temperature first exhaust gas and then supply the heated second exhaust gas to the turbine 512. It is thus possible for the fuel cell system 700 according to the seventh embodiment to rotate the turbine 512 using the thermal energy of the hydrogen and the thermal energy of the first exhaust gas in addition to the energy of the second exhaust gas. It is thus possible for the fuel cell system 700 according to the seventh embodiment to further increase mechanical power to be supplied from the turbine 512 to the compressor 514. This allows the fuel cell system 700 according to the seventh embodiment to further reduce electric power to be consumed by the motor 516.

In addition, it is possible for the fuel cell system 700 according to the seventh embodiment to decrease, using the second heat exchanger 710, the temperature of the hydrogen that has not yet been supplied to the PEFC 130. This makes it possible to avoid a situation in which the PEFC 130 degrades due to heat.

The embodiments have been described so far with reference to the appended drawings, but it goes without saying that the present disclosure is not limited to the embodiments. It is apparent that a person skilled in the art may find various alterations and modifications within the scope of the claims and it should be understood that they will naturally come under the technical scope of the present disclosure.

For example, the case where the first heat exchanger 520 is provided between the second heat exchanger 710 and the turbine 512 in the second exhaust gas flow path 134 in the fuel cell system 700 according to the seventh embodiment has been described as an example. The first heat exchanger 520 may be, however, provided between the PEFC 130 and the second heat exchanger 710 in the second exhaust gas flow path 134.

In addition, the fuel cell system 600 according to the sixth embodiment may include the second heat exchanger 710.

In addition, the fuel cell systems 100, 200, 300, 400, 500, 600, and 700 according to the first to seventh embodiments may each include a combustor that combusts the first exhaust gas produced in the solid oxide fuel cell 150. The combustor may be provided between the solid oxide fuel cell 150 and the reformer 120. In this case, it is possible to increase the ammonia decomposition efficiency of the reformer 120. In addition, the combustor may combust the first exhaust gas discharged from the reformer 120. In this case, it is possible to cause the turbine 310, the turbine 416, and the turbine 512 to each collect more energy.

### Reference Signs List

- 100: fuel cell system
- 110: tank
- 120: reformer
- 130: polymer electrolyte fuel cell (PEFC)
- 150: solid oxide fuel cell (SOFC)
- 170: exhaust gas supply flow path
- 200: fuel cell system
- 250: solid oxide fuel cell (SOFC)
- 300: fuel cell system
- 310: turbine
- 400: fuel cell system
- 416: turbine
- 420: first heat exchanger
- 500: fuel cell system
- 512: turbine
- 520: first heat exchanger
- 600: fuel cell system
- 700: fuel cell system
- 710: second heat exchanger

## Claims

1. A fuel cell system comprising:
a tank configured to store ammonia;
a reformer configured to thermally decompose ammonia supplied from the tank to generate hydrogen;
a solid oxide fuel cell configured to generate electricity using, as a fuel, the ammonia supplied from the tank or the hydrogen generated by the reformer;
a polymer electrolyte fuel cell configured to generate electricity using, as a fuel, the hydrogen generated by the reformer; and
an exhaust gas supply flow path configured to supply a first exhaust gas produced in the solid oxide fuel cell to the reformer.

2. The fuel cell system according to claim 1, comprising a turbine configured to be rotated by the first exhaust gas discharged from the reformer.

3. The fuel cell system according to claim 1, comprising:
a turbine; and
a first heat exchanger configured to exchange heat between a fluid that has not yet been supplied to the turbine and the first exhaust gas discharged from the reformer.

4. The fuel cell system according to claim 2 or 3, wherein the turbine is rotated by a second exhaust gas produced in the polymer electrolyte fuel cell in addition to the first exhaust gas discharged from the reformer.

5. The fuel cell system according to claim 4, comprising a second heat exchanger configured to exchange heat between the hydrogen generated by the reformer and the second exhaust gas.
